(19) Europäisches Patentamt
European Patent Office
Office européen des brevets

(11) **EP 2 557 100 B1**

(12) **EUROPÄISCHE PATENTSCHRIFT**

(45) Veröffentlichungstag und Bekanntmachung des Hinweises auf die Patenterteilung:
**11.06.2014  Patentblatt 2014/24**

(51) Int Cl.:
*C08G 18/22* *(2006.01)*   *C08G 18/24* *(2006.01)*

(21) Anmeldenummer: **12175866.8**

(22) Anmeldetag: **11.07.2012**

(54) **Zusammensetzung enthaltend Zinn- und/oder Zink-Salze der Ricinolsäure sowie mindestens ein weiteres Zinncarboxylat und Verwendung der Zusammensetzung bei der Herstellung von Polyurethansystemen**

Compound containing tin and/or zinc salts of ricinoleic acid, urea and at least one other tin carboxylate and use of the compound in the production of polyurethane systems

Composition comprenant de l'étain et / ou des sels de zinc d'acide ricinoléique et au moins un carboxylate d'étain et utilisation de la composition dans la fabrication de systèmes de polyuréthane

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2011   DE 102011110016**

(43) Veröffentlichungstag der Anmeldung:
**13.02.2013   Patentblatt 2013/07**

(73) Patentinhaber: **Evonik Degussa GmbH**
**45128 Essen (DE)**

(72) Erfinder:
• **Emmrich-Smolczyk, Eva**
**45133 Essen (DE)**
• **Modro, Harald**
**45966 Gladbeck (DE)**

(56) Entgegenhaltungen:
**EP-A1- 1 167 410      EP-A2- 1 013 704**

EP 2 557 100 B1

**Beschreibung**

Die Erfindung betrifft Zusammensetzungen, insbesondere geeignet zur Katalyse der Herstellung von Polyurethansystemen, enthaltend mindest ein Zinn- und/oder Zinkricinoleat und mindestens ein weiteres Zinncarboxylat, welches kein Zinnricinoleat.

Polyurethansysteme sind z. B. Polyurethanbeschichtungen, Polyurethanadhäsive, Polyurethandichtmittel, Polyurethanelastomere oder Polyurethanschäume/ -schaumstoffe.

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Für einkomponentige feuchtigkeitsreaktive Polyurethanzusammensetzungen geeignete Katalysatoren enthalten meist Zinnverbindungen, wie Zinncarboxylate, insbesondere Zinnoctoat (entspricht Zinn-2-Ethylhexanoat), vielfach kombiniert mit tertiären Aminen.

So wird die Verwendung von Zinnoctoat bei der Herstellung von PUR-Weichschäumen auf der Basis von Polyetherolen beispielsweise in Steve Lee, Huntsman Polyurethanes, The Polyurethanes Book, Verlag Wiley, S. 140, 143-144 beschrieben. Das Zinnoktoat dient als Katalysator der Reaktion von Isocyanaten mit Polyolen (auch als Gelkatalysator bezeichnet) über einen komplexen Übergangszustand. Während der Herstellung des Schaumes hydrolysiert das Zinnoctoat und setzt sowohl das Salz der 2-Ethylhexansäure, als auch die Säure an sich, frei. Die Zersetzung ist zwar erwünscht, weil auf diese Weise die Rückreaktion der Urethanbindung zu den Edukten unterbunden ist, sollte nach Möglichkeit jedoch nicht zur Freisetzung eventuell toxikologisch bedenklicher Substanzen führen. Auch in der Patentliteratur sind zahlreiche Anmeldungen zu finden, die die Verwendung von besagtem Zinnoctoat beschreiben, so z. B. in GB 1432281, GB 1422056, GB 1382538, GB 1012653 oder GB 982280. In diesen Schriften werden als bevorzugte Katalysatorsysteme solche eingesetzt, die Zinnoctoat aufweisen.

Dibutylzinndilaurat (DBTDL) ist ein bei der Herstellung von Polyurethanschäumen, insbesondere von hochelastischen (High Resilience, HR) Polyurethanschäumen, insbesondere nach der Slabstock-Methode einer der effizientesten Katalysatoren, wenn es darum geht die Dichteverteilung über einen großen Schaumblock möglichst homogen zu gestalten. Aus gesundheitlichen und ökotoxikologischen Gründen wird der Einsatz von DBTDL bei der Produktion von Polyurethan-Schaumstoffen immer häufiger vermieden.

Zur Erfüllung der sich in den letzten Jahren deutlich verschärfenden Anforderungen an die Automobil- und Möbelindustrie und deren Schaumstoffzulieferer bezüglich Emissions- und Toxizitätsspezifikationen wurden bereits Katalysatorsysteme entwickelt, die weniger toxische, in den Schaum einpolymerisierbare Liganden enthalten. Solche z. B. auf Rizinolsäure basierenden Systeme werden beispielsweise in EP 1013704 beschrieben.

Oben genannte Systeme stellten bis dato eine der wenigen Alternativen zu den weitverbreiteten Zinnoctoat-Katalysatorsystem (Zinn(II)-Salz der 2-Ethylhexansäure) bzw. Organozinnverbindungen, wie Dibutylzinndilaurat dar. Insbesondere letztgenannte Systeme sind im Hinblick auf die Toxizität der emittierenden Substanzen kritisch zu betrachten. Die, beispielsweise während und nach der Verschäumung freiwerdende 2-Ethylhexansäure gibt wegen möglicher fruchtschädigender (entwicklungsschädigender) Wirkungen beim Menschen (R 63) Anlass zur Besorgnis.

Die als alternative Katalysatoren häufig eingesetzten Zinncarboxylate führen aber häufig zu großen Dichteschwankungen in dem resultierenden Schaumblock, die sich auch auf die Formstabilität auswirken.

EP1 013 704 A2 beschreibt die Verwendung von Metallsalzen der Ricinolsäure oder deren Lösungen in Wasser oder organischen Lösungsmitteln bei der Herstellung von Polyurethanschäumen. EP 1 167 410 A1 beschreibt die Verwendung von Metallsalzen der Ricinolsäure oder deren Lösungen in wässrigen oder organischen Lösungsmitteln zur Herstellung von Polyurethanschäumen in Kombination mit einem sprziellen reaktiven Amin.

Schaumblöcke werden üblicherweise zu Matratzen verarbeitet, in dem der Block in gleichmäßige Scheiben geschnitten wird. Besonders wichtig ist dabei eine homogene Verteilung der Dichte über den gesamten Schaumblock. Mit der Dichte sind mechanische Eigenschaften, wie z.B. die Eindrückhärte verknüpft. Beim Ausschneiden von Scheiben, z. B. Matratzen aus einem stark deformierten Polyurethanschaumblock fallen große Mengen Schnittabfälle an.

Aufgabe der vorliegenden Erfindung war deshalb die Bereitstellung eines alternativen Katalysatorsystems für die Erzeugung von Polyurethanen, insbesondere Polyurethanschaumstoffen, welches die vorgenannten Nachteile überwindet. Vorzugsweise weist das erfindungsgemäße Katalysatorsystem nur geringe Mengen und bevorzugt kein DBTDL auf und ermöglicht beim Einsatz als Katalysator bei der Herstellung von HR-Polyurethanschaumstoffen den Erhalt von Schaumstoffblöcken, die eine möglichst homogene Dichteverteilung aufweisen.

Überraschenderweise wurde gefunden, dass Zusammensetzungen, die Zinn- und/oder Zinkricinoleat sowie mindestens ein weiteres Zinncarboxylat aufweisen, diese Aufgabe löst.

Gegenstand der vorliegenden Erfindung ist deshalb eine Zusammensetzung, gemäß Anspruch 1, sowie ein Polyurethansystem, das eine erfindungsgemäße Zusammensetzung aufweist.

Ebenfalls Gegenstand der vorliegenden Erfindung ist die Verwendung der erfindungsgemäßen Zusammensetzungen als Katalysatorsysteme bei der Herstellung von Polyurethansystemen, vorzugsweise Polyurethanbeschichtungen, Polyurethanadhäsiven, Polyurethandichtmitteln, Polyurethanelastomeren oder Polyurethanschäumen/-schaumstoffen sowie die Verwendung von erfindungsgemäßen Polyurethansystemen als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte.

Die erfindungsgemäßen Zusammensetzungen haben den Vorteil, dass sie als Katalysatorsystem sowohl zur Herstellung von flexiblen Schäumen auf Basis von Ether- und Esterpolyolen als auch von Hartschäumen sowie Schäumen, deren Eigenschaften zwischen diesen Klassifizierungen liegen, wie z.B. halbharte Schäume, eingesetzt werden können.

Die erfindungsgemäßen Zusammensetzungen haben den großen Vorteil, dass durch die Auswahl der Carboxylatreste bei den Zinncarboxylaten die Viskosität der Zusammensetzung gezielt eingestellt werden kann. Es können außerdem Eigenschaften wie Zinngehalt, Molekulargewicht und somit auch Aktivität bzw. Reaktivität des Katalysatorsystems gezielt eingestellt werden.

Die erfindungsgemäßen Zusammensetzungen haben außerdem den Vorteil, dass sie vollkommen frei von Zinnorganischen Verbindungen, also Verbindungen die eine Sn-C-Bindung aufweisen, sein können. Insbesondere sind die erfindungsgemäßen Zusammensetzungen frei von DBTDL.

Mit den erfindungsgemäßen Zusammensetzungen als Katalysatorsystem hergestellte Polyurethanschaumblöcke weisen eine relativ gleichmäßige (Schaum-)Dichte über den gesamten Block auf. Durch die relativ gleichmäßige Schaumdichte werden Polyurethanschaumblöcke erhalten, die nur geringe Härteunterschiede innerhalb des Blocks aufweisen.

Durch die Verwendung der erfindungsgemäßen Zusammensetzungen als Katalysatorsystem bei der Herstellung von Polyurethanschaumblöcken werden Schaumblöcke erhalten, die nur geringe Deformationen aufweisen, wodurch Stücke aus diesen Blöcken geschnitten werden können, ohne dass viel Abfall produziert wird.

Die erfindungsgemäßen Zusammensetzungen, das Verfahren bzw. die Verwendung zur Herstellung der Polyurethanschäume, die Polyurethanschäume selbst sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C.

Die erfindungsgemäße Zusammensetzung, die insbesondere zur Katalyse der Herstellung von Polyurethansystemen geeignet ist, zeichnet sich dadurch aus, dass sie mindest ein Zinn- und/oder Zinkricinoleat und mindestens ein weiteres Zinncarboxylat, welches kein Zinnricinoleat ist, aufweist. Als Zinn- bzw. Zinksalze werden dabei bevorzugt die Zinn (II)- bzw. Zink (II)-Salze eingesetzt.

Das Massenverhältnis der Summe der Massen aus Zinn- und Zinkricinoleat zur Summe der Masse der weiteren Zinncarboxylate beträgt in der erfindungsgemäßen Zusammensetzung vorzugsweise von 10 : 1 bis 1:1, bevorzugt von 5 : 1 bis 1,5 : 1 und besonders bevorzugt von 4 :1 bis 2:1.

Das bzw. die weiteren Zinncarboxylate sind vorzugsweise ausgewählt aus der Gruppe umfassend Monocarbonsäuresalze mit 1 bis 30, vorzugsweise 4 bis 18 und besonders bevorzugt 8 bis 12 Kohlenstoffatomen, insbesondere Zinnsalze der n-Octansäure, n-Nonansäure, 3,5,5-Trimethylhexansäure, n-Decansäure oder 2-Ethylhexansäure. Bevorzugte Zinncarboxylate sind solche von Carbonsäuren, die nicht ausschließlich eine einzelne Ethyl- oder n-Propylverzweigung in 2-Position aufweisen. Besonders bevorzugte Zinncarboxylate sind die Zinnsalze der 3,5,5-Trimethylhexansäure oder n-Octansäure.

Die in der erfindungsgemäßen Zusammensetzung enthaltenen Zinn- oder Zinkricinoleate sowie die weiteren Zinncarboxylate können z. B. dadurch erhalten werden, dass die entsprechenden Säuren oder deren Salze, insbesondere Alkalisalze mit $SnCl_2$ umgesetzt werden. Diese Umsetzung kann z. B. wie in US 4,532,262 beschrieben erfolgen.

Es kann vorteilhaft sein, wenn die erfindungsgemäßen Zusammensetzungen eine oder mehrere weitere Komponenten aufweisen.

So können die erfindungsgemäßen Zusammensetzungen als weitere Komponenten ein oder mehrere Lösungsmittel, wie z. B. Wasser und/oder ein oder mehrere organischen Lösungsmitteln enthalten. Vorzugsweise enthält die erfindungsgemäße Zusammensetzung ein oder mehrere organische Lösungsmittel, bevorzugt zumindest ein organisches aprotisches Lösungsmittel. Enthält die erfindungsgemäße Zusammensetzung ein organisches Lösungsmittel, so ist dieses vorzugsweise ausgewählt aus Polyolen, Estern, Polyestern, Olefinen, Phthalaten, endverkappten Polyethern oder Mineralölen. Enthält die erfindungsgemäße Zusammensetzung ein Lösemittel, so beträgt das Massenverhältnis der Summe der Massen der Zinn- und Zinksalze zur Summe der Masse der Lösungsmittel vorzugsweise von 100 zu 1 bis 1 zu 2, bevorzugt von 50 zu 1 bis 1 zu 1 und besonders von 25 zu 1 bis 2 zu 1.

Neben dem oder den Lösungsmitteln oder an Stelle der Lösungsmittel kann die erfindungsgemäße Zusammensetzung weitere Komponenten, wie z. B. ein oder mehrere Amine, insbesondere tertiäre Amine, ein oder mehrere Silikonstabilisatoren und gegebenenfalls ein oder mehrere Emulgatoren aufweisen. Bevorzugt besteht die Zusammensetzung ausschließlich aus Zinn- und/oder Zinkricinoleat(en) und Zinncarboxylat(en) und ggf. einem oder mehreren Lösungsmitteln.

Die erfindungsgemäße Zusammensetzung ist vorzugsweise ein Katalysatorsystem zur Katalyse der Herstellung von Polyurethansystemen bzw. kann als Katalysatorsystem in einem Verfahren zur Herstellung von Polyurethansystemen, vorzugsweise von Polyurethanbeschichtungen, von Polyurethanadhäsiven, von Polyurethandichtmitteln, von Polyurethanelastomeren oder von Polyurethanschäumen/-schaumstoffen verwendet werden. Besonders bevorzugt wird die erfindungsgemäße Zusammensetzung als Katalysatorsystem in einem Verfahren zur Herstellung HR-Polyurethanschaum verwendet.

Die erfindungsgemäße Zusammensetzung kann deshalb auch eine Formulierung zur Herstellung eines Polyurethansystems, insbesondere Polyurethanschaums sein, enthaltend oder bestehend aus Zinn- und/oder Zinkricinoleat(en) und Zinncarboxylat(en), ggf. organische Lösemittel, ein oder mehrere organische Isocyanate mit zwei oder mehr Isocyanat-Funktionen, ein oder mehrere Polyole mit zwei oder mehr gegenüber Isocyanat reaktiven Gruppen, ggf. weitere Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additiven.

Die erfindungsgemäße Zusammensetzung weist als Formulierung als weiteres Additiv eine Mischung auf, die Harnstoff, Zuckeralkohol, insbesondere einen Monosaccharid-Zuckeralkohole der Formel $C_nH2_{n+2}O_n$) mit n = 5 oder 6, vorzugsweise Xylitol, d-Glucitol (Sorbitol) oder d-Mannitol, bevorzugt d-Glucitol, und Polyethylenglykol, vorzugsweise mit einem mittleren Molekulargewicht Mw von 100 bis 1500 g/mol, bevorzugt von 250 bis 1000 g/mol und besonders bevorzugt von 500 bis 750 g/mol aufweist. Das Gewichtsverhältnis von Harnstoff zu Zuckeralkohol beträgt vorzugsweise von 1 zu 1 bis 1 zu 10, bevorzugt von 1 zu 1,5 bis 1 zu 5 und besonders bevorzugt von 1 zu 2 bis 1 zu 4. Das Gewichtsverhältnis von Harnstoff zu Polyethylenglykol beträgt vorzugsweise von 1 zu 0,5 bis 1 zu 4, bevorzugt von 1 zu 0,75 bis 1 zu 3 und besonders bevorzugt von 1 zu 1 bis 1 zu 2.

Bei der erfindungsgemäßen Verwendung bzw. in dem erfindungsgemäßen Verfahren kann die erfindungsgemäße Zusammensetzung als Katalysatorsystem der Reaktionsmischung vor oder während der Reaktion (zur Ausbildung der Urethanbindungen) zugegeben werden. Bevorzugt wird die Zusammensetzung mit Hilfe eines Mischkopfes zudosiert.

Wie beschrieben, kann das Katalysatorsystem weitere Bestandteile, wie z. B. Wasser, tertiäres Amin, Silikonstabilisator und gegebenenfalls Emulgator aufweisen. Eine solche Lösung des Katalysators wird häufig als Aktivatorlösung bezeichnet. Bevorzugt wird das Katalysatorsystem jedoch separat zugegeben, gegebenenfalls gelöst in einem Polyetherpolyol.

In dem erfindungsgemäßen Verfahren (erfindungsgemäße Verwendung) ist die direkte Zudosierung eines Katalysatorsystems (einer Zusammensetzung), welches ausschließlich Zinn- und/oder Zinkricinoleat(e) und Zinncarboxylat(e) aufweist, bevorzugt. Bei der direkten Zudosierung des Katalysatorsystems sollten die Mischung aus Zinn- und/oder Zinkricinoleat(e) und Zinncarboxylat(e) vorzugsweise flüssig vorliegen, um ohne die Verwendung von Lösungsmittel eine einfache Zugabe zu gewährleisten.

Sowohl Viskosität als auch Metallgehalt des Katalysatorsystems kann durch Änderung der Kettenlänge der Säure variiert werden, sodass eine für das jeweilige System optimale Reaktivität und Viskosität eingestellt werden kann. Die direkte Dosierung des viskosen Zinnricinoleats (Salz der Ricinolsäure) in die Polyurethansystemkomponenten, insbesondere Verschäumungskomponenten hingegen kann aufgrund dessen sehr hoher Viskosität zu Problemen führen. Da viele Verschäumer nur über eine direkte Dosierung verfügen, ist ein Produkt, welches den gegebenen Bedingungen individuell angepasst werden kann, deshalb von großem Vorteil.

Alternativ zur direkten Verschäumung kann das Katalysatorsystem auch in verdünnter Form zudosiert werden. Dabei sind wasserfreie Lösungen vorzuziehen, da einige Zinn-/Zinksalze nur bedingt hydrolysestabil sind.

Die erfindungsgemäßen Zusammensetzungen (Katalysatorsysteme) sind als Katalysatoren in den üblichen Formulierungen zur Herstellung von Polyurethansystemen, insbesondere Polyurethanschäumen/-schaumstoffen, enthaltend oder bestehend aus einem oder mehreren organischen Isocyanaten mit zwei oder mehr Isocyanat-Funktionen, einem oder mehreren Polyolen mit zwei oder mehr gegenüber Isocyanat reaktiven Gruppen, ggf. weiteren Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additiven, einsetzbar.

Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Besonders bevorzugte Isocyanate sind Mischungen von TDI und MDI.

Geeignete Polyole im Sinne dieser Erfindung sind vorzugsweise alle organischen Substanzen mit mehreren gegenüber Isocyanaten reaktiven Gruppen, sowie deren Zubereitungen. Bevorzugte Polyole sind alle zur Herstellung von Polyurethansystemen, insbesondere Polyurethanschaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen). Zudem können auf natürlichen Ölen basierende Polyether (natural oil based polyols, NOPs)eingesetzt werden. Diese Polyole werden aus natürlichen Ölen wie z.B. Soja- oder Palmöl gewonnen und können unmodifiziert oder modifiziert verwendet werden.

Ein geeignetes Verhältnis von Isocyanat und Polyol, ausgedrückt als Index der Formulierung, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete Einsatzmengen der erfindungsgemäßen Zusammensetzung / des erfindungsgemäßen Katalysatorsystems richten sich nach dem Typ des Katalysators und liegen üblicherweise im Bereich von 0,01 bis 5 pphp (= Gewichtsteilen Zinn- und Zinkricinoleate und Zinncarboxylate bezogen auf 100 Gewichtsteile Polyol), vorzugsweise von 0,05 bis 1 pphp. Bei beispielsweise einem 400 g Schaum (400 g - 0,114 mol Polyol) entspricht dies einer molaren Einsatzmenge von $1 *10^{-5}$ bis $1 *10^{-2}$ mol.

Geeignete weitere Katalysatoren, die im erfindungsgemäßen Verfahren zusätzlich eingesetzt werden können, sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat. Vorzugsweise werden als weitere Katalysatoren solche eingesetzt, die keine organische Zinnverbindungen, insbesondere kein Dibutylzinndilaurat enthalten.

Geeignete Einsatzmengen dieser zusätzlichen Katalysatoren richten sich nach dem Typ des Katalysators und liegen üblicherweise im Bereich von 0,01 bis 5 pphp (= Gewichtsteilen bezogen auf 100 Gewichtsteile Polyol) bzw. 0,1 bis 10 pphp für Kaliumsalze.

Geeignete Wasser-Gehalte in dem erfindungsgemäßen Verfahren gemäß der vorliegenden Erfindung hängen davon ab, ob zusätzlich zum Wasser noch physikalische Treibmittel eingesetzt werden oder nicht. Bei rein Wassergetriebenen Schäumen liegen die Werte typischerweise bei 1 bis 20 pphp, werden zusätzlich andere Treibmittel eingesetzt, verringert sich die Einsatzmenge auf üblicherweise 0 oder 0,1 bis 5 pphp. Zur Erlangung hoher Schaumraumgewichte werden weder Wasser noch andere Treibmittel eingesetzt.

Geeignete physikalische Treibmittel im Sinne dieser Erfindung sind Gase, beispielsweise verflüssigtes $CO_2$, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141 b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben Wasser und ggf. physikalischen Treibmitteln, können auch andere chemische Treibmittel eingesetzt werden, die mit Isocyanaten unter Gasentwicklung reagieren, wie beispielsweise Ameisensäure oder Carbonate.

Geeignete Flammschutzmittel im Sinne dieser Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Die Verarbeitung der Formulierungen zu Schaumstoffen kann nach allen dem Fachmann geläufigen Verfahren erfolgen, beispielsweise im Handmischverfahren oder bevorzugt mit Hilfe von Hochdruck- oder Niederdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Durch das erfindungsgemäße Verfahren bzw. die erfindungsgemäße Verwendung können Polyurethansysteme, insbesondere Polyurethanschäume erhalten werden, die sich dadurch auszeichnen, dass sie eine erfindungsgemäße Zusammensetzung bzw. deren Bestandteile aufweisen. Vorzugsweise weist das erfindungsgemäße Polyurethansystem von 0,01 bis 5 Gew.-% an Zinn- und/oder Zinkricinoleat(en) und Zinncarboxylate(en) auf.

Das erfindungsgemäße Polyurethansystem ist vorzugsweise eine Polyurethanbeschichtung, ein Polyurethanadhäsiv, ein Polyurethandichtmittel, ein Polyurethanelastomer, ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum. Die Bezeichnung Polyurethan ist hierbei als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäßen Polyurethansysteme, insbesondere die Polyurethanschäume können z. B. als Kühlschrankisolierung, Dämmplatte, Sandwichelement, Rohrisolation, Sprühschaum, 1- & 1.5-Komponenten-Dosenschaum, Holzimitat, Modellschaum, Verpackungsschaum, Matratzen, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**Beispiele**

Es wurden Schaumstoffblöcke auf einer Niederdruckverschäummaschine der Firma Laader Berg Typ Maxfoam F8 hergestellt. Eine ausführliche Beschreibung der Herstellung von Schaumblöcken kann DE 2142450 entnommen werden.

Es wurden Schaumstoffblöcke auf einer Niederdruckverschäummaschine der Firma Laader Berg Typ Maxfoam F8 hergestellt. Eine ausführliche Beschreibung der Herstellung von Schaumblöcken kann DE 2142450 entnommen werden.

Die Verschäummaschine wurde mit den folgenden Parametern betrieben:

Polyolausstoss: 250kg/min,
75 Liter Trogvolumen,
Mischkammerdruck 4,5 bar,
Rührergeschwindigkeit: 4500 U/min,
Luftbeladung: 3,0 l/min

Als Rohstoffe zur Herstellung der Schaumblöcke wurden die in Tabelle 1 genannten Rohstoffe verwendet.

Tabelle 1: Rohstoffe zur Herstellung der Schaumblöcke

| | |
|---|---|
| Polyol 1 | Polyetherol trifunktionell, MW 4800, 25% Styrolacrylnitril-gefüllt, Bayer MaterialScience AG |
| Polyol 2 | Polyetherol trifunktionell, MW 6000, BASF |
| Katalysator 1 | Tegoamin B 75, eine Mischung aus 75 % Tegoamin 33 (Triethylendiamin 33% in Dipropylenglykol (DPG)) + 25 % Tegoamin BDE (Bis-2-Dimethylaminoethyl)-ether 70% in DPG), Evonik Goldschmidt GmbH |
| Katalysator 2 | Tegoamin DEOA 85 (Diethanolamin 85% in Wasser), Evonik Goldschmidt GmbH |
| Katalysator 3 | Zinkricinoleat, Evonik Goldschmidt GmbH |
| Katalysator 4 | Zinnoctoat (29%), Evonik Goldschmidt GmbH |
| Katalysator 5 | Zinnricinoleat, Evonik Goldschmidt GmbH |
| Silikonstabilisator | Tegostab B 8783 LF 2, Evonik Goldschmidt GmbH |
| Gemisch 1 | Polyethylenglykol (20%), Wasser (25%), d-Glucitol (45%), Urea (10%) |
| Isocyanat | Toloylendiisocyanat, TDI 80, (80% 2,4-Isomere, 20% 2,6-Isomer, Bayer MaterialScience AG |

Zur Herstellung der Schaumblöcke wurden die in Tabelle 2 aufgeführten Formulierungen verwendet. Dabei werden die Rohstoffe über separate Leitungen zum Mischkopf gepumpt und im jeweiligen Mischungsverhältnis im Mischkopf miteinander verrührt/vermischt. Die Beispiele V1 bis V3 stellen Vergleichsversuche dar, das Beispiel EM1 ein erfindungsgemäßes Beispiel.

Tabelle 2: Formulierung zur Herstellung der Schaumblöcke (Angaben in Teilen pro 100 Teile Polyol)

| Beispiel | V1 | V2 | EM1 | EM2 |
|---|---|---|---|---|
| Polyol 1 | 70 | 70 | 70 | 70 |
| Polyol 2 | 22 | 22 | 22 | 22 |
| CaCO3 | 8 | 8 | 8 | 8 |
| TDI index | 101 | 101 | 101 | 101 |
| TDI 80 | 30,18 | 30,18 | 30,18 | 31,65 |
| Wasser sep. | 2,2 | 2,2 | 2,2 | 1,85 |
| Katalysator 1 | 0,11 | 0,11 | 0,12 | 0,05 |
| Katalysator 2 | 1,2 | 1,2 | 1,2 | 1 |
| Gemisch 1 | --- | --- | --- | 1,5 |
| Silikonstabilisator | 0,26 | 0,26 | 0,26 | 0,26 |
| Katalysator 3 | --- | --- | 0,3 | 0,3 |
| Katalysator 4 | 0,16 | --- | 0,12 | 0,12 |
| Katalysator 5 | --- | 0,55 | --- | --- |

Es wurden Schaumblöcke mit einer ungefähren Größe von ca. 1,16 m x 2,03 m X 2,03 m (H x B x T) erhalten.

Bei den so hergestellten Schaumblöcken wurden an verschiedenen Stellen der Blöcke die Dichte und die Härteverteilung (Stauchhärte, Druckspannung) bestimmt. Dazu wurde die Oberfläche des Schaumblocks in 9 Quadranten aufgeteilt. Jedes Schaumstoffprüfteil aus den einzelnen Quadranten wurde einem Druckversuch nach DIN 53577 unterzogen. Dabei wurde sowohl die Druckspannung in kPa, wie auch der sogenannte Sag-Faktor nach ISO 2439 gemessen. Der Sag-Faktor ist eine Kennzahl, die die Relation zwischen der Kraft, die zum Zusammendrücken des Schaumes auf 65% der Ausgangsdicke benötigt wird und der Kraft, die für die Schaumdeformation auf 25% erforderlich ist, ausdrückt. Es werden Druckspannungen zueinander ins Verhältnis gesetzt, weshalb diese Größe keine Einheit besitzt. Gemessen wurden die Prüfkörper mit einer Universalprüfmaschine H10KS der Firma Tinius Olsen in der folgenden Art und Weise:

Von dem erhaltenen Schaum wurden zunächst 2 cm von der Bodenzone und von allen vier Seiten jeweils 1 cm entfernt. Danach wurde der verbleibende Schaumkern in Schichten zu je 5 cm geschnitten. Aus diesen Scheiben wurden anschließend die Prüfkörper von 10 x 10 cm hergestellt.

Für die Stauchhärtemessung und Bestimmung des SAG-Faktors wurde ein Messstempel von 10 x 10 cm benötigt. Dabei komprimiert der Stempel den Prüfkörper dreimal, bevor bei der vierten Stauchung die eigentliche Messung erfolgt. Es wurden Be- und Entlastungskurven des Schaumes aufgenommen. Für Beispielmesskurven siehe: Becker, Braun, Kunststoff-Handbuch, Carl Hanser Verlag München, Band 7: Polyurethane, S. 494, 1983.

Die ermittelte Druckspannung bei 40% Stauchung entspricht der Stauchhärte in kPa. Der SAG-Faktor wird ähnlich ermittelt, nur das hier die Kraft der Stauchung auf 65% ins Verhältnis gesetzt wird zur benötigten Kraft, um den Schaum auf 25% zu komprimieren. $\nu$Sag errechnet sich dann aus der folgenden Formel,

$$\nu Sag = \frac{Sag^{Max} - Sag^{Min}}{Sag^{Min}} * 100$$

wobei die niedrigsten und höchsten Messwerte des SAG-Faktors herangezogen werden.

Die Ergebnisse dieser Bestimmungen sind in Tabelle 3 wiedergegeben.

Tabelle 3: Ergebnisse der Prüfung der Dichte und Druckspannung

| Dichte in kg/m$^3$ Messestelle im Schaumblock | V1 | V2 | EM1 | EM2 |
|---|---|---|---|---|
| oben | 36,4 | 37,4 | 36,6 | 36,5 |
| Mitte | 40,1 | 43,0 | 39,4 | 38,5 |
| unten | 40,7 | 44,7 | 40,0 | 39,0 |
| Seite mitte | 37,8 | 40,5 | 38,0 | 37,9 |
| Mittelwert | 38,8 | 41,4 | 38,5 | 38,0 |
| Schwankung % | 11,1 | 17,6 | 8,8 | 6,6 |
| **Stauchhärte (Druckspannung) bei 40% Kompression / Deformation in kPa Messestelle im Schaumblock** | | | | |
| oben | 3,8 | 3,5 | 3,8 | 4,0 |
| Mitte | 4,5 | 4,1 | 4,2 | 4,0 |
| unten | 4,2 | 3,8 | 3,7 | 4,0 |
| Seite mitte | 4,2 | 4,0 | 4,1 | 4,2 |
| Mittelwert | 4,175 | 3,85 | 3,95 | 4,05 |
| Schwankung % | 16,8 | 15,6 | 10,1 | 4,9 |
| νSag* | 33,3 | 68,4 | 21,9 | 4,7 |

Bezüglich der Dichteverteilung zeigt das Vergleichsbeispiel V1, dass die Verwendung nur des Katalysators 4 zu einer höheren Dichteschwankung führt, ebenso wie die alleinige Verwendung von Katalysator 5 in Beispiel V2, die die höchsten Dichteschwankungen zur Folge hat.

Die erfindungsgemäße Kombination von Katalysator 3 und 4 (erfindungsgemäßen Beispiele EM1 und EM2) zeigt eine deutlich homogenere Verteilung der Dichte über den gesamten Schaumstoffblock.

**Patentansprüche**

1.  Zusammensetzung, die eine Formulierung zur Herstellung eines Polyurethansystems ist, enthaltend oder bestehend aus Zinn- und/oder Zinkricinoleat(en) und Zinncarboxylat(en), ggf. organische Lösemittel, ein oder mehrere organische Isocyanate mit zwei oder mehr Isocyanat-Funktionen, ein oder mehrere Polyole mit zwei oder mehr gegenüber Isocyanat reaktiven Gruppen, ggf. weitere Katalysatoren für die Reaktionen Isocyanat-Polyol und/oder Isocyanat-Wasser und/oder die Isocyanat-Trimerisierung, Wasser, optional physikalischen Treibmittel, optional Flammschutzmittel und ggf. weitere Additive,
wobei die Zusammensetzung als Formulierung als weiteres Additiv eine Mischung enthält, die Harnstoff, Zuckeralkohol und Polyethylenglykol aufweist,
wobei die Zusammensetzung mindest ein Zinn- und/oder Zinkricinoleat und mindestens ein weiteres Zinncarboxylat, welches kein Zinnricinoleat ist, aufweist.

2.  Zusammensetzung nach Anspruch 1, **dadurch gekennzeichnet, dass** das Massenverhältnis der Summe der Massen aus Zinn- und Zinkricinoleat zur Summe der Masse der weiteren Zinncarboxylate von 10 : 1 bis 1 : 1 beträgt.

3.  Zusammensetzung nach Anspruch 1 oder 2, **dadurch gekennzeichnet, dass** die Zinncarboxylate ausgewählt sind aus der Gruppe umfassend Monocarbonsäuresalze mit 4 bis 18 Kohlenstoffatomen.

4.  Zusammensetzung gemäß mindestens einem der Ansprüche 1 bis 3, **dadurch gekennzeichnet, dass** die Zusammensetzung als weitere Komponenten ein oder mehrere tertiäre Amine, ein oder mehrere Silikonstabilisatoren und/oder ein oder mehrere Emulgatoren aufweisen.

5.  Zusammensetzung gemäß mindestens einem der Ansprüche 1 bis 4, **dadurch gekennzeichnet, dass** die Zusammensetzung ein oder mehrere organische Lösungsmittel enthält.

**6.** Zusammensetzung nach einem der Ansprüche 1 bis 5, **dadurch gekennzeichnet, dass** die Zusammensetzung ein Katalysatorsystem zur Katalyse der Herstellung von Polyurethansystemen ist.

**7.** Zusammensetzung nach einem der Ansprüche 1 bis 6, **dadurch gekennzeichnet, dass** das Gewichtsverhältnis von Harnstoff zu Zuckeralkohol vorzugsweise von 1 zu 1 bis 1 zu 10 und das Gewichtsverhältnis von Harnstoff zu Polyethylenglykol von 1 zu 1 bis 1 zu 4 beträgt.

**8.** Verwendung von Zusammensetzungen gemäß mindestens einem der Ansprüche 1 bis 7 als Katalysatorsystemen bei der Herstellung von Polyurethansystemen, vorzugsweise Polyurethanbeschichtungen, Polyurethanadhäsiven, Polyurethandichtmitteln, Polyurethanelastomeren oder Polyurethanschäumen/- schaumstoffen.

**9.** Verwendung nach Anspruch 8, **dadurch gekennzeichnet, dass** das Katalysatorsystem der Reaktionsmischung vor oder während der Reaktion zugegeben wird.

**10.** Polyurethansystem, **dadurch gekennzeichnet, dass** es eine Zusammensetzung gemäß zumindest einem der Ansprüche 1 bis 7, aufweist.

**11.** Polyurethansystem nach Anspruch 10, **dadurch gekennzeichnet, dass** es von 0,01 bis 5 Gew.-% an Zinn- und/oder Zinkricinoleat aufweist.

**12.** Polyurethansystem nach Anspruch 10 oder 11, **dadurch gekennzeichnet, dass** das Polyurethansystem eine Polyurethanbeschichtung, ein Polyurethanadhäsiv, ein Polyurethandichtmittel, ein Polyurethanelastomer, ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum ist.

**13.** Verwendung von Polyurethansystemen gemäß zumindest einem der Ansprüche 10 bis 12 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte.

**Claims**

**1.** Composition which is a formulation for producing a polyurethane system, containing or consisting of tin and/or zinc ricinoleate(s) and tin carboxylate(s), optionally organic solvents, one or more organic isocyanates having two or more isocyanate functions, one or more polyols having two or more groups which are reactive toward isocyanate, optionally further catalysts for the isocyanate-polyol and/or isocyanate-water reactions and/or isocyanate trimerization, water, optionally physical blowing agents, optionally flame retardants and optionally further additives, the composition, as formulation, containing a mixture comprising urea, sugar alcohol and polyethylene glycol as further additive, the composition comprising at least one tin ricinoleate and/or zinc ricinoleate and at least one further tin carboxylate which is not a tin ricinoleate.

**2.** Composition according to Claim 1, **characterized in that** the mass ratio of the sum of the masses of tin ricinoleate and zinc ricinoleate to the sum of the mass of the further tin carboxylates is from 10:1 to 1:1.

**3.** Composition according to Claim 1 or 2, **characterized in that** the tin carboxylates are selected from the group consisting of monocarboxylic acid salts having from 4 to 18 carbon atoms.

**4.** Composition according to at least one of Claims 1 to 3, **characterized in that** the composition comprises one or more tertiary amines, one or more silicone stabilizers and/or one or more emulsifiers as further components.

**5.** Composition according to at least one of Claims 1 to 4, **characterized in that** the composition contains one or more organic solvents.

**6.** Composition according to any of Claims 1 to 5, **characterized in that** the composition is a catalyst system for catalysis of the production of polyurethane systems.

7. Composition according to any of Claims 1 to 6, **characterized in that** the weight ratio of urea to sugar alcohol is preferably from 1:1 to 1:10 and the weight ratio of urea to polyethylene glycol is from 1:1 to 1:4.

8. Use of compositions according to at least one of Claims 1 to 7 as catalyst systems in the production of polyurethane systems, preferably polyurethane coatings, polyurethane adhesives, polyurethane sealants, polyurethane elastomers or polyurethane foams.

9. Use according to Claim 8, **characterized in that** the catalyst system is added to the reaction mixture before or during the reaction.

10. Polyurethane system, **characterized in that** it comprises a composition according to at least one of Claims 1 to 7.

11. Polyurethane system according to Claim 10, **characterized in that** it comprises from 0.01 to 5% by weight of tin ricinoleate and/or zinc ricinoleate.

12. Polyurethane system according to Claim 10 or 11, **characterized in that** the polyurethane system is a polyurethane coating, a polyurethane adhesive, a polyurethane sealant, a polyurethane elastomer, a rigid polyurethane foam, a flexible polyurethane foam, a viscoelastic foam, an HR foam, a semirigid polyurethane foam, a thermoformable polyurethane foam or an integral foam, preferably an HR polyurethane foam.

13. Use of polyurethane systems according to at least one of Claims 10 to 12 as refrigerator insulation, insulation board, sandwich element, pipe insulation, spray foam, 1- & 1.5-component pressure-pack foam, imitation wood, modelling foam, packaging foam, mattresses, furniture upholstery, automobile seat upholstery, headrest, dashboard, automobile interior trim, automobile interior roof, sound absorption material, steering wheel, shoe sole, carpet backing, filter foam, sealing foam, sealant and adhesive or for producing corresponding products.

**Revendications**

1. Composition qui est une formulation pour la préparation d'un système de polyuréthane, contenant ou constitué par un/des ricinoléate(s) d'étain et/ou de zinc et un/des carboxylate(s) d'étain, le cas échéant des solvants organiques, un ou plusieurs isocyanates organiques présentant deux fonctions isocyanate ou plus, un ou plusieurs polyols présentant deux groupes réactifs par rapport à isocyanate ou plus, le cas échéant d'autres catalyseurs pour les réactions isocyanate-polyol et/ou isocyanate-eau et/ou la trimérisation d'isocyanate, de l'eau, éventuellement des agents gonflants physiques, éventuellement des agents ignifuges et le cas échéant d'autres additifs, la composition contenant, comme formulation, comme autre additif, un mélange qui présente de l'urée, de l'alcool de sucre et du polyéthylèneglycol, la composition présentant au moins un ricinoléate d'étain et/ou de zinc et au moins un autre carboxylate d'étain, qui n'est pas un ricinoléate d'étain.

2. Composition selon la revendication 1, **caractérisée en ce que** le rapport massique de la somme des masses de ricinoléate d'étain et de zinc à la somme des masses des autres carboxylates d'étain vaut 10:1 à 1:1.

3. Composition selon la revendication 1 ou 2, **caractérisée en ce que** les carboxylates d'étain sont choisis dans le groupe comprenant les sels d'acides monocarboxyliques comprenant 4 à 18 atomes de carbone.

4. Composition selon au moins l'une quelconque des revendications 1 à 3, **caractérisée en ce que** la composition présente, comme autres composants, une ou plusieurs amines tertiaires, un ou plusieurs stabilisateurs siliconés et/ou un ou plusieurs émulsifiants.

5. Composition selon au moins l'une quelconque des revendications 1 à 4, **caractérisée en ce que** la composition contient un ou plusieurs solvants organiques.

6. Composition selon l'une quelconque des revendications 1 à 5, **caractérisée en ce que** la composition contient un système catalytique pour la catalyse de la préparation de systèmes de polyuréthane.

7. Composition selon l'une quelconque des revendications 1 à 6, **caractérisée en ce que** le rapport pondéral d'urée à alcool de sucre vaut de préférence 1:1 à 1:10 et le rapport pondéral d'urée à polyéthylèneglycol vaut 1:1 à 1:4.

8. Utilisation de compositions selon au moins l'une quelconque des revendications 1 à 7 comme systèmes catalytiques lors de la préparation de systèmes de polyuréthane, de préférence de revêtements de polyuréthane, d'adhésifs de polyuréthane, d'agents d'étanchéité de polyuréthane, d'élastomères de polyuréthane ou de mousses/matériaux en mousse de polyuréthane.

9. Utilisation selon la revendication 8, **caractérisée en ce que** le système catalytique du mélange réactionnel est ajouté avant ou pendant la réaction.

10. Système de polyuréthane, **caractérisé en ce qu'**il présente une composition selon au moins l'une quelconque des revendications 1 à 7.

11. Système de polyuréthane selon la revendication 10, **caractérisé en ce qu'**il présente 0,01 à 5% en poids de ricinoléate d'étain et/ou de zinc.

12. Système de polyuréthane selon la revendication 10 ou 11, **caractérisé en ce que** le système de polyuréthane est un revêtement de polyuréthane, un adhésif de polyuréthane, un agent d'étanchéité de polyuréthane, un élastomère de polyuréthane, une mousse dure de polyuréthane, une mousse souple de polyuréthane, une mousse viscoélastique, une mousse HR, une mousse de polyuréthane semi-dure, une mousse de polyuréthane thermoformable ou une mousse intégrale, de préférence une mousse HR de polyuréthane.

13. Utilisation de systèmes de polyuréthane selon au moins l'une quelconque des revendications 10 à 12 comme isolation de réfrigérateur, panneau d'isolation, élément sandwich, isolation de tuyaux, mousse à pulvériser, mousse dosée à 1 et 1,5 composants, imitation du bois, mousse pour modélisation, mousse d'emballage, matelas, rembourrage de meuble, rembourrage de siège de voiture, appuie-tête, tableau de bord, revêtement interne de voiture, ciel de voiture, matériau d'absorption du bruit, volant, semelle de chaussure, mousse pour face arrière de tapis, mousse de filtre, mousse d'étanchéité, agent d'étanchéité et adhésif ou pour la préparation des produits correspondants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1432281 A
- GB 1422056 A
- GB 1382538 A
- GB 1012653 A
- GB 982280 A
- EP 1013704 A
- EP 1013704 A2
- EP 1167410 A1
- US 4532262 A
- DE 2142450

**In der Beschreibung aufgeführte Nicht-Patentliteratur**

- Huntsman Polyurethanes. **STEVE LEE.** The Polyurethanes Book. Verlag Wiley, 140, 143-144
- Polyurethane. **BECKER, BRAUN.** Kunststoff-Handbuch. Carl Hanser Verlag, 1983, vol. 7, 494